Europäisches Patentamt

European Patent Office

Office européen des brevets

(11) Numéro de publication : **0 051 518**
**B1**

# (12) FASCICULE DE BREVET EUROPÉEN

(45) Date de publication du fascicule du brevet :
03.04.85

(21) Numéro de dépôt : 81401656.4

(22) Date de dépôt : 21.10.81

(51) Int. Cl.⁴ : **H 02 P   7/28**, B 60 L   7/22,
H 02 P   3/08

(54) Circuit de commande pour le fonctionnement en traction ou en freinage d'un moteur à courant continu.

(30) Priorité : 30.10.80 FR 8023209

(43) Date de publication de la demande :
12.05.82 Bulletin 82/19

(45) Mention de la délivrance du brevet :
03.04.85 Bulletin 85/14

(84) Etats contractants désignés :
AT BE CH DE FR GB IT LI SE

(56) Documents cités :
DE-A- 2 448 844
FR-A- 2 343 359
FR-A- 2 375 753
FR-A- 2 376 550
FR-A- 2 399 155

(73) Titulaire : JEUMONT-SCHNEIDER Société anonyme
dite:
31-32, Quai de Dion Bouton
F-92811 Puteaux Cedex (FR)

(72) Inventeur : Brulard, Michel
10, rue des Vignes
F-92140 Clamart (FR)

(74) Mandataire : Lejet, Christian et al
31-32, Quai de Dion Bouton
F-92811 Puteaux Cedex (FR)

Jouve, 18, rue St-Denis, 75001 Paris, France

## Description

La présente invention concerne un circuit de commande d'un moteur électrique à courant continu notamment destiné à la traction ferroviaire et alimenté entre une ligne de puissance et la terre et, plus précisément, un tel circuit permettant le fonctionnement en traction ou en freinage aussi bien en mode dissipatif qu'en mode récupératif d'énergie d'un tel moteur.

De tels circuits de commande sont par exemple décrits dans les brevets français 2 335 995, 2 343 359, 2 399 155 et 2 375 753. En particulier, le brevet FR 2 375 753 décrit un circuit de commande d'un moteur à courant continu, comprenant une résistance de dissipation d'énergie dans le circuit de freinage. Au moins une partie de cette résistance se trouve, quel que soit le mode de freinage, en série avec l'induit du moteur. Le brevet FR 2 343 359 prévoit également des résistances en série dans le trajet du courant du moteur lors du freinage par récupération.

Les circuits connus de ce type présentent l'inconvénient de ne pas permettre le retour au freinage par récupération d'énergie dès lors qu'un freinage par dissipation d'énergie a été amorcé même si les conditions favorables à la récupération d'énergie ont réapparu entre-temps.

La présente invention a pour but d'obvier à cet inconvénient grâce à un circuit permettant le passage progressif, continu et réversible d'un mode de freinage à l'autre.

Ce circuit commande un moteur à courant continu avec un induit et un inducteur à excitation séparée. Il comprend un hacheur et une résistance de dissipation d'énergie, hors-circuit lors du fonctionnement en traction du moteur et connectée en série avec ce dernier lors du fonctionnement en freinage quel qu'en soit le mode. Selon l'invention, le circuit comprend entre la ligne d'alimentation en puissance et la terre, une première branche incluant le hacheur dont le thyristor principal a son anode reliée à la ligne et une première diode dont la cathode est reliée à la cathode du thyristor principal, le hacheur étant shunté par une deuxième branche incluant en série une deuxième et une troisième diodes disposées en opposition par rapport au thyristor principal, la première diode étant elle-même shuntée par une troisième branche incluant la résistance de dissipation en série avec un premier et un second interrupteurs fonctionnant en alternat, l'induit du moteur étant connecté, en excitation séparée, entre le point de jonction des deuxième et troisième diodes et le point de jonction des interrupteurs.

Il comprend, d'autre part, une unité de commande qui fait varier automatiquement le courant circulant dans l'inducteur du moteur et le temps de conduction dudit thyristor principal du hacheur en fonction de la tension instantanée de la ligne d'alimentation lors d'un fonctionnement en freinage, de manière à modifier progressivement et de façon réversible le mode de freinage en réglant la valeur de la résistance ce qui permet de minimiser la puissance dissipée dans la résistance et d'optimiser la puissance récupérée par la ligne à tout instant.

L'invention sera mieux comprise et d'autres buts, avantages et caractéristiques de celle-ci apparaîtront plus clairement à la lecture de la description qui suit d'un mode de réalisation, à laquelle une planche de dessin est annexée.

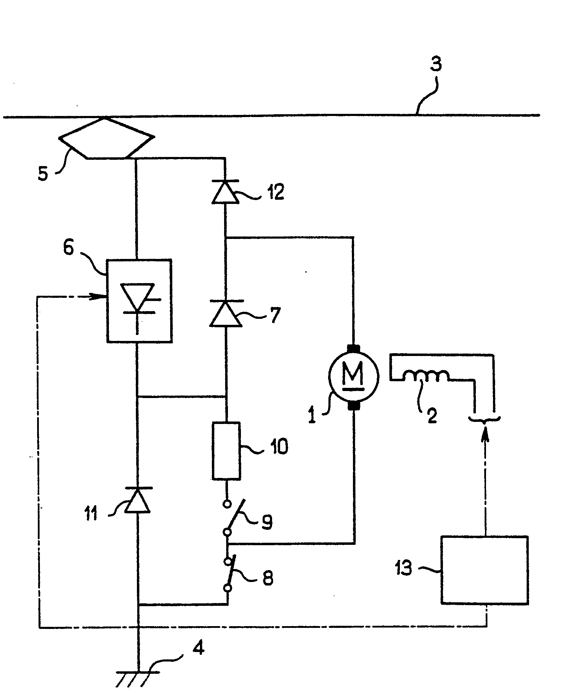

La figure unique représente schématiquement un circuit de commande conforme à la présente invention.

En référence maintenant à cette figure, le moteur 1 à courant continu est du type à excitation séparée au moyen d'un inducteur 2. Le circuit est connecté entre la ligne aérienne d'alimentation 3 et la terre 4 au moyen d'un pantographe 5 et des roues du véhicule de traction ferroviaire ainsi équipé.

Le hacheur 6 fonctionne, pour la traction, en abaisseur de tension et alimente l'induit du moteur 1 par l'intermédiaire de la diode 7 et de l'interrupteur 8 fermé dans ce cas.

Lors du freinage, le moteur 1 doit fonctionner en générateur de tension. Dans ce but, l'interrupteur 8 est ouvert tandis que l'interrupteur 9 est fermé. Deux chemins s'offrent alors au courant selon le mode de freinage choisi.

S'il y a récupération d'énergie, c'est-à-dire, lorsque la tension engendrée par le moteur moins la tension existant aux bornes de la résistance 10 est légèrement supérieure à la tension de la ligne 3 d'alimentation, le courant passe par la diode 11, la résistance 10, l'interrupteur fermé 9, le moteur 1, la diode 12 et le pantographe avant d'être récupéré par la ligne 3.

S'il y a dissipation d'énergie, c'est-à-dire si la différence précitée des tensions est inférieure à la tension de la ligne 3, le courant se ferme alors sur la boucle incluant le moteur 1, la diode 12, le hacheur 6, la résistance de dissipation 10 et l'interrupteur fermé 9. Le hacheur 6 constitue donc alors un transformateur d'intensité pour courant continu. L'avantage présenté par ce circuit de commande réside essentiellement dans le fait que le passage d'un mode de freinage à l'autre est progressif, continu et réversible.

En effet, la tension aux bornes de la résistance de dissipation 10 varie en fonction de l'intensité du courant qui la traverse, et cette intensité peut être modifiée au moyen du hacheur 6. En outre, la tension de sortie du moteur 1 fonctionnant en générateur peut être modifiée en fonction du courant d'excitation appliqué à l'inducteur 2.

De ce fait, la puissance dissipée dans la résistance 10 est aisément réglable et il en est de même de la puissance récupérée par la ligne 3. Dans ce but, l'unité de commande 13 permet de modifier, d'une part, le courant circulant dans l'inducteur 2 et, d'autre part, le temps de conduction du thyristor principal du hacheur 6.

Il est alors possible de rendre cette double modification automatique en fonction de la tension réelle de la ligne 3 et des variations instantanées de cette tension, de manière à minimiser la puissance dissipée dans la résistance 10 et optimiser la puissance récupérée par la ligne 3 à tout instant.

Dans ce but, l'unité de commande 13 est reliée à un voltmètre non représenté, mesurant la tension de la ligne d'alimentation 3.

Les interrupteurs 8 et 9 peuvent être avantageusement du type statique tels que thyristors.

## Revendications

1. Circuit de commande pour le fonctionnement en traction ou en freinage, aussi bien en mode dissipatif qu'en mode récupératif d'énergie d'un moteur à courant continu (1) avec un induit et un inducteur (2) à excitation séparée, équipant notamment un véhicule de traction ferroviaire et alimenté entre une ligne de puissance (3) et la terre (4), ledit circuit comprenant un hacheur (6) et une résistance de dissipation d'énergie (10) qui est hors-circuit lors du fonctionnement en traction dudit moteur (1) et connectée en série avec ce dernier lors du fonctionnement en freinage quel qu'en soit le mode, caractérisé en ce qu'il comprend, entre la ligne d'alimentation en puissance (3) et la terre (4), une première branche incluant ledit hacheur (6) dont le thyristor principal a son anode reliée à ladite ligne (3), et une première diode (11) dont la cathode est reliée à la cathode dudit thyristor principal, ledit hacheur (6) étant shunté par une deuxième branche incluant en série une deuxième et une troisième diodes (7, 12) disposées en opposition par rapport audit thyristor principal, ladite première diode (11) étant elle-même shuntée par une troisième branche incluant ladite résistance de dissipation (10) en série avec un premier et un second interrupteurs (8, 9) fonctionnant en alternat, l'induit dudit moteur (1) étant connecté, en excitation séparée, entre le point de jonction desdites deuxième et troisième diodes (7, 12) et le point de jonction desdits interrupteurs (8, 9).

2. Circuit selon la revendication 1, caractérisé en ce qu'il comprend une unité de commande (13) faisant varier automatiquement le courant circulant dans l'inducteur (2) dudit moteur (1) et le temps de conduction dudit thyristor principal dudit hacheur (6) en fonction de la tension instantanée de ladite ligne d'alimentation (3) lors d'un fonctionnement en freinage, de manière à modifier progressivement et de façon réversible le mode de freinage en réglant la valeur de ladite résistance (10) ce qui permet de minimiser la puissance dissipée dans ladite résistance (10) et d'optimiser la puissance récupérée par la ligne (3) à tout instant.

## Claims

1. Control circuit for drive and/or brake operation, both in an energy dissipation mode and in an energy recovery mode, of a DC motor (1) with an armature and an inductor (2) with separate excitation, provided especially in a railway driving vehicle and supplied between a power line (3) and earth (4), the said circuit comprising a chopper (6) and an energy dissipation resistor (10) which is cut out of circuit at drive operation of the motor (1) and connected in series with the said motor at brake operation whatever the mode, characterised in that it comprises, between the power supply line (3) and earth (4), a first branch including the said chopper (6) whose main thyristor has its anode connected to the said line (3), and a first diode (11) whose cathode is connected to the cathode of the said main thyristor, the said chopper (6) being shunted by a second branch including in series a second diode and third diode (7, 12) which are arranged in opposition with respect to the said main thyristor, the said first diode (11) being itself shunted by a third branch including the said dissipation resistor (10) in series with first and second switches (8, 9) operating in alternation, the armature of the said motor (1) being connected, in separate excitation, between the junction point of the said second and third diodes (7, 12) and the junction point of the said switches (8, 9).

2. Circuit according to claim 1, characterised in that it comprises a control unit (13) causing automatic varying of the current flowing in the inductor (2) of the said motor (1) and the conduction time of the said main thyristor of the said chopper (6) in accordance with the instantaneous voltage of the said supply line (3) when in braking operation, so as to modify gradually and reversibly the bracking mode, regulating the value of the said resistor (10), which permits of minimising the power dissipated in the said resistor (10) and optimising the power recovered by the line (3) at any instant.

## Ansprüche

1. Steuerschaltung für den Zug- oder Bremsbetrieb, sowohl in der Betriebsweise mit Energiedissipation als auch in der Betriebsweise mit Energierückgewinnung, bei einem Gleichstrommotor (1), dessen Anker und Feldwicklung (2) getrennt erregt werden, insbesondere zur Ausrüstung einer Eisenbahn-Zugmaschine und mit zwischen einer Leistungsleitung (3) und Masse (4) abgegriffener Stromversorgung, wobei diese Schaltung einen Zerhacker (6) und einen Energiedissipationswiderstand (10) umfaßt, der im Zugbetrieb des Motors (1) außer Betrieb ist und im Bremsbetrieb unabhängig von der Betriebsweise in Reihe mit diesem geschaltet ist, dadurch gekennzeichnet, daß sie zwischen der Leistungs-Versorgungsleitung (3) und Masse (4) einen ersten Zweig enthält, der den Zerhacker (6) umfaßt, dessen Hauptthyristor an seiner Anode mit der genannten Leitung (3) verbunden ist, sowie eine erste Diode (11) umfaßt, deren Katode mit der Katode des genannten Hauptthyristors verbunden ist, wobei der Zerhacker (6) durch einen zweiten Zweig überbrückt ist, der in Reihenschaltung eine zweite sowie eine dritte Diode (7, 12) enthält, die in bezug auf den Hauptthyristor mit entgegengesetzter Polung angeordnet sind, wobei die genannte erste Diode (11) ihrerseits durch einen dritten Zweig überbrückt ist, welcher den genannten Dissipationswiderstand (10) in Reihe mit einem ersten und einem zweiten Unterbrecher (8, 9) enthält, die abwechselnd betrieben werden, wobei der Anker des genannten Motors (1) bei getrennter Erregung zwischen den Verbindungspunkt der zweiten und der dritten Diode (7, 12) und den Verbindungspunkt der genannten Unterbrecher (8, 9) geschaltet ist.

2. Schaltung nach Anspruch 1, dadurch gekennzeichnet, daß sie eine Steuereinheit (13) umfaßt, die den in der Feldwicklung (2) des genannten Motors (1) fließenden Strom und die Leitungszeit des genannten Hauptthyristors des genannten Zerhackers (6) automatisch variieren läßt in Abhängigkeit von der Augenblicksspannung der genannten Versorgungsleitung (3) im Bremsbetrieb, so daß die Bremsbetriebsart progressiv und reversibel verändert wird, indem der Wert des genannten Widerstandes (10) geregelt wird, wodurch es ermöglicht wird, die in dem genannten Widerstand (10) verbrauchte Leistung jederzeit zu minimieren und die in die Leitung (3) rückgespeiste Leistung jederzeit zu optimieren.